# EUROPÄISCHE PATENTSCHRIFT

(11) **EP 2 549 292 B1**
(45) Veröffentlichungstag und Bekanntmachung des Hinweises auf die Patenterteilung: **28.02.2018**
(21) Anmeldenummer: 12168801.4
(22) Anmeldetag: 22.05.2012
(51) Int. Cl.: G01S 13/34, G01S 7/02, G01S 13/93

(54) **FMCW-Radarsystem und Interferenzerkennungsverfahren für FMCW-Radarsysteme**
FMCW radar system and interference detection method for FMCW radar systems
Système radar FMCW et procédé de détection d'interférences pour systèmes radar FMCW

(30) Priorität: 22.07.2011 DE 102011079615
(43) Veröffentlichungstag der Anmeldung: 23.01.2013
(73) Patentinhaber: ROBERT BOSCH GMBH, 70442 Stuttgart (DE)
(72) Erfinder: Himmelstoss, Armin, 71554 Weissach Im Tal (DE); Hildebrandt, Juergen, 73235 Weilheim (DE); Heilmann, Stefan, 71665 Vaihingen/Enz (DE)

(56) Entgegenhaltungen:
- US-A- 4 217 827
- US-A- 6 094 160
- US-A1- 2006 125 682

## Beschreibung

Die vorliegende Erfindung betrifft Radarsysteme im Allgemeinen. Insbesondere betrifft die vorliegende Erfindung FMCW-Radarsysteme und Interferenzerkennungsverfahren für FMCW-Radarsysteme.

### Stand der Technik

FMCW-Radarsysteme werden heute in einer Vielzahl von Anwendungen eingesetzt. Beispielsweise können FMCW-Radarsysteme insbesondere in Kraftfahrzeugen eingesetzt werden. FMCW-Radarsysteme in Kraftfahrzeugen werden z.B. zur Erkennung von Objekten eingesetzt, welche sich in der Umgebung des Kraftfahrzeugs befinden. Die von den FMCW-Radarsystemen erhaltenen Daten zu Objekten, welche sich um das Fahrzeug befinden, können daraufhin z.B. zur automatischen Geschwindigkeitsregelung eines Kraftfahrzeugs genutzt werden.

FMCW-Radarsysteme ermöglichen es dabei, eine Geschwindigkeit und eine Entfernung eines Objekts gegenüber dem FMCW-Radarsystem zu bestimmen. Dazu werden mehrere Modulationen vom Radar ausgesendet und die reflektierten Radarsignale ausgewertet. Eine Reihe von ausgesendeten Modulationen (Radarsignalen) wird als Sequenz bezeichnet. Die einzelnen Modulationen werden dabei jeweils von verschiedenen Modulationsparametern, insbesondere von einer Modulationssteilheit der Sendefrequenz, charakterisiert. Beispielsweise kann eine Modulation eine Modulationssteilheit von 400MHz/ms aufweisen.

Zur Erkennung von Objekten werden üblicherweise eine Vielzahl von Modulationen von Radarsignalen ausgesendet. Die Modulationen können dabei die gleichen oder unterschiedliche Modulationsparameter aufweisen.

Da Radarsysteme im Allgemein darauf beruhen, elektromagnetische Wellen auszusenden und die Reflektionen dieser ausgesendeten elektromagnetischen Wellen an Objekten zu erfassen und auszuwerten, sind Radarsysteme anfällig für Interferenzen anderer Radarsysteme. Interferenzen sind gegenseitige Störungen von Radarsystemen. Durch Interferenzen kann z.B. die Empfindlichkeit eines Radarsensors eingeschränkt werden oder dessen Detektionsbereich beeinflusst werden. Ferner kann eine Interferenz zu einem fehlerhaften Erkennen oder einem nicht Erkennen von Objekten führen

In modernen Radarsystemen kommen daher Verfahren zur Erkennung von Interferenzen zum Einsatz.

Die Druckschrift US 2007/0018886 A1 zeigt ein Interferenzerkennungsverfahren, bei welchem Interferenzen basierend auf einer Änderungsgeschwindigkeit der Amplitude des empfangenen Radarsignals erkannt werden.

Ferner zeigt die JP 2002 168947 (A) ein Verfahren zur Interferenzerkennung, bei welchem ein Schwellwert für das Ausgangssignal eines Mischers einer Empfangseinheit festgelegt wird. Übersteigt der Pegel des Ausgangssignals den Schwellwert, wird von einer Interferenz ausgegangen. Die Bestimmung des Schwellwerts erfolgt dabei in Abhängigkeit einer relativen Geschwindigkeit oder eines Abstands zwischen dem Radarsystem und einem erkannten Objekt.

Die Druckschrift US 2006/125682 A1 zeigt ein Verfahren zur Reduktion von Interferenzen in einem zurückgestrahlten Radarsignal eines FMCW-Radars.

Die Druckschrift US 6 094 160 A zeigt ein Verfahren zum Zurückweisen von System-Interferenzen in einem FLS System.

Schließlich zeigt die Druckschrift US 4 217 827 A ein System zum Erkennen von falschen Radarsignalen, welche durch Störquellen hervorgerufen werden.

### Offenbarung der Erfindung

Die vorliegende Erdfindung offenbart ein FMCW-Radarsystem mit den Merkmalen des Patentanspruchs 1 und ein Interferenzerkennungsverfahren für FMCW-Radarsysteme mit den Merkmalen des Patentanspruchs 7.

### Demgemäß ist vorgesehen:

Ein FMCW-Radarsystem mit einer Sende-/Empfangseinheit, welche dazu ausgebildet ist, Radarsignale, welche mittels zumindest eines Modulationsparameters moduliert sind, auszusenden und Radarsignale, welche von Objekten reflektiert werden zu empfangen, und mit einem Interferenzdetektor zum Erkennen von Interferenzen in den empfangenen Radarsignalen basierend auf zumindest einem den jeweiligen Modulationsparametern entsprechenden frequenzabhängigen Empfangsleistungsschwellwert, wobei einer der Modulationsparameter eine Modulationssteilheit des ausgesendeten Radarsignals ist.

Ein Interferenzerkennungsverfahren für FMCW-Radarsysteme mit den Schritten Bereitstellen eines erfindungsgemäßen FMCW-Radarsystems, Senden von Radarsignalen, welche mittels zumindest eines Modulationsparameters moduliert sind, Empfangen von Radarsignalen, welche von Objekten reflektiert werden, Erkennen von Interferenzen in den empfangenen Radarsignalen basierend auf zumindest einem den jeweiligen Modulationsparametern entsprechenden frequenzabhängigen Empfangsleistungsschwellwert, wobei einer der Modulationsparameter eine Modulationssteilheit des ausgesendeten Radarsignals ist.

### Vorteile der Erfindung

Die der vorliegenden Erfindung zu Grunde liegende Erkenntnis besteht darin, dass eine Empfangsleistung von Radarsignalen für real existierende Objekte bestimmte Maximalwerte üblicherweise nicht übersteigt.

Die der vorliegenden Erfindung zu Grunde liegende Idee besteht nun darin, eine Interferenzerkennung basierend auf Schwellwerten für die Empfangsleistung von Radarsignalen durchzuführen, wobei die Empfangsleistungsschwellwerte mittels zumindest einer Modulationssteilheit des ausgesendeten Radarsignals bestimmt werden. Dazu wird für eine gegebene Modulationssteilheit eine Signatur bzw. ein Satz von frequenzabhängigen Empfangsleistungsschwellwerten bestimmt, welche zu den in der jeweiligen Modulation vorkommenden Frequenzen jeweils einen Empfangsleistungsschwellwert angeben.

Wird ein Satz von frequenzabhängigen Empfangsleistungsschwellwerten für jeweils eine Modulationssteilheit bestimmt, wird eine sehr effektive und einfache Interferenzerkennung möglich. Ein einzelner Satz von frequenzabhängigen Empfangsleistungsschwellwerten ermöglicht es dann für eine Modulation zu bestimmen, ob innerhalb der Modulation eine Interferenz aufgetreten ist.

Dabei kann eine Interferenz für einzelne Frequenzen einer Modulation erkannt werden. Ferner kann ein Interferenz auch über einen Teilfrequenzbereich oder den gesamten Frequenzbereich einer Modulation erkannt werden. Insbesondere können mittels dem modulations- und/oder frequenzabhängigen Empfangsleistungsschwellwert Interferenzen von tatsächlichen Zielen auch innerhalb des Frequenzbereichs, in welchem Ziele typischerweise auftreten, unterschieden werden. Ferner bietet die vorliegende Erfindung eine Möglichkeit, jegliche Art von Interferenzen in dem zulässigen Frequenzbereich zu erkennen.

Diese Interferenzen können z.B. durch weitere FMCW-Radarsysteme, FSK-, Step-FMCW-, Chirp- und/oder Pulsradarsysteme sowie weitere Radarsysteme hervorgerufen werden.

Ferner kann ein Satz von frequenzabhängigen Empfangsleistungsschwellwerten für eine bekannte Modulation einmal bestimmt und abgespeichert werden. Das Erkennen einer Interferenz kann dann durch einen sehr schnellen und wenig aufwendigen Vergleich der Empfangsleistung bei einer bestimmten Frequenz mit dem Empfangsleistungsschwellwert bestimmt werden, welchen der Satz von frequenzabhängigen Empfangsleistungsschwellwerten für diese Frequenz angibt.

Ein Satz von frequenzabhängigen Empfangsleistungsschwellwerten für eine bestimmte Modulationssteilheit kann beispielsweise mittels der FMCW-Gleichung, der allgemeinen Radargleichung oder von einer dieser Gleichungen abgeleiteten Bestimmungsgleichungen bestimmt werden.

Ein Satz von frequenzabhängigen Empfangsleistungsschwellwerten kann dabei nicht nur in Abhängigkeit einer bestimmten Modulationssteilheit bestimmt werden. Der Satz von frequenzabhängigen Empfangsleistungsschwellwerten kann beispielsweise in Abhängigkeit eines Relativgeschwindigkeitsbereichs sein und/oder eines Zielabstandsbereichs und/oder für einen maximal erwarteten Radarrückstreuquerschnitt von Objekten bestimmt werden, welche mittels des Radars erkannt werden sollen. Dabei kann bei der Bestimmung des Satzes von Empfangsleistungsschwellwerten eine Abwägung zwischen der Erkennungsgenauigkeit von Interferenzen und der Wahrscheinlichkeit eines Fehlalarms bei der Interferenzerkennung getroffen werden. Ein erfindungsgemäßer Satz von frequenzabhängigen Empfangsleistungsschwellwerten kann insbesondere als Kurve in einem Diagramm dargestellt werden.

Vorteilhafte Ausführungsformen und Weiterbildungen ergeben sich aus den Unteransprüchen sowie aus der Beschreibung unter Bezugnahme auf die Figuren.

In einer Ausführungsform weist der Interferenzdetektor eine Auswerteeinheit auf, welche dazu ausgebildet ist, die Empfangsleistung und die Frequenz der empfangenen Radarsignale zu bestimmen, eine Schwellwerteinheit auf, welche dazu ausgebildet ist, den zumindest einen frequenzabhängigen Empfangsleistungsschwellwert basierend auf der bestimmten Frequenz und den jeweiligen Modulationsparametern zu bestimmen, und eine Vergleichseinheit auf, welche dazu ausgebildet ist, den bestimmten Empfangsleistungsschwellwert mit der Empfangsleistung der empfangenen Radarsignale zu vergleichen und das Vorhandensein einer Interferenz anzuzeigen, falls die Empfangsleistung größer ist als der Empfangsleistungsschwellwert. In einer weiteren Ausführungsform ist die Schwellwerteinheit dazu ausgebildet, den frequenzabhängigen Empfangsleistungsschwellwert basierend auf der bestimmten Frequenz aus einem Satz den jeweiligen Modulationsparametern entsprechender frequenzabhängiger Empfangsleistungsschwellwerte zu bestimmen.

In einer weiteren Ausführungsform weisen die Modulationsparameter ferner eine Sendeleistung der Sende-/Empfangseinheit und/oder einen Gewinn der Antenne der Sende-/Empfangseinheit und/oder einen maximal auftretenden Radarrückstreuquerschnitt erwarteter Objekte und/oder eine Geschwindigkeit, mit welcher sich das FMCW-Radarsystem bewegt, und/oder Daten bereits erkannter Objekte, wie z.B. Relativgeschwindigkeit und/oder Abstand, auf. Werden weitere Modulationsparameter zur Bestimmung des frequenzabhängigen Empfangsleistungsschwellwerts genutzt, kann die Toleranz, mit welcher eine Interferenz erkannt wird, deutlich gesenkt werden. Dadurch werden Interferenzen sicherer erkannt und die Wahrscheinlichkeit eines Fehlalarms wird verringert. Damit wird die Verfügbarkeit und die Qualität der Objekterkennung des FMCW-Radarsystems erhöht.

In einer Ausführungsform ist die Schwellwerteinheit dazu ausgebildet, den Empfangsleistungsschwellwert ferner basierend auf einer Einbausituation der Sende-/Empfangseinheit zu bestimmen. Zusätzlich oder alternativ ist die Schwellwerteinheit dazu ausgebildet, den Empfangsleistungsschwellwert ferner basierend auf einer Sende-/Empfangscharakteristik der Sende-/Empfangseinheit zu bestimmen. Die Sende-/Empfangscharakteristik der Sende-/Empfangseinheit beeinflusst die Empfangsleistung des FMCW-Radarsystems und ist von der jeweiligen elektrischen sowie mechanischen Konstruktion und der Einbausituation des FMCW-Radarsystems abhängig. Werden zur Bestimmung des Empfangsleistungsschwellwerts die Einbausituation und die Sende-/Empfangscharakteristik berücksichtigt, wird die Genauigkeit der Interferenzerkennung weiter erhöht. Die Einflüsse, welche die Einbausituation und die Sende-/Empfangscharakteristik auf die jeweiligen Empfangsleistungsschwellwerte haben, können in Simulationen ermittelt oder durch Messungen an dem realen FMCW-Radarsystem bestimmt werden.

In einer Ausführungsform ist ein erster Speicher vorgesehen, in welchem für jeweils einen Satz von Empfangsleistungsschwellwerten zumindest zwei Empfangsleistungsschwellwerte für jeweils unterschiedliche Frequenzen gespeichert sind, wobei der Interferenzdetektor dazu ausgebildet ist, einen Empfangsleistungsschwellwert für Frequenzen, für welche kein Empfangsleistungsschwellwert gespeichert ist, basierend auf den zumindest zwei gespeicherten Empfangsleistungsschwellwerten zu interpolieren. Wird nur eine Auswahl von Empfangsleistungsschwellwerten eines Satzes von Empfangsleistungsschwellwerten gespeichert, kann der jeweilige Satz sehr speichereffizient gespeichert werden. Das Speichern weniger Empfangsleistungsschwellwerten eines Satzes von Empfangsleistungsschwellwerten reduziert den Speicherbedarf für das Speichern des jeweiligen Satzes dabei auf einen Bruchteil des Speichers, welcher nötig ist, um den gesamte Satz zu speichern. Dabei bleibt durch die Interpolation die Möglichkeit einen Empfangsleistungsschwellwert für beliebige Frequenzen einer Modulation zu bestimmen erhalten.

In einer Ausführungsform ist ein zweiter Speicher vorgesehen, in welchem für eine Vielzahl von Sätzen von Empfangsleistungsschwellwerten jeweils zumindest zwei Empfangsleistungsschwellwerte für jeweils unterschiedliche Frequenzen in einem Kennlinienfeld gespeichert sind. Sind die Empfangsleistungsschwellwerte für unterschiedliche Sätze von Empfangsleistungsschwellwerten in einem Kennlinienfeld in einem einzelnen Speicher abgelegt wird ein besonders effizienter Zugriff auf die einzelnen Empfangsleistungsschwellwerte möglich. Insbesondere können die Sätze von Empfangsleistungsschwellwerten in dem Kennlinienfeld entsprechend der Reihenfolge abgelegt werden, in welcher die den einzelnen Sätzen entsprechenden Modulationen von dem FMCW-Radarsystem ausgesendet werden. Ein Zugriff auf die Speicherorte des nächsten Satzes von Empfangsleistungsschwellwerten kann dann durch einfaches Addieren eines Offsets auf einen Zeiger auf die Empfangsleistungsschwellwerte erfolgen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### Kurze Beschreibung der Zeichnungen

Die vorliegende Erfindung wird nachfolgend anhand der in den schematischen Figuren der Zeichnungen angegebenen Ausführungsbeispiele näher erläutert. Es zeigen dabei:
- Fig. 1: ein Blockschaltbild einer Ausführungsform eines erfindungsgemäßen FMCW-Radarsystems;
- Fig. 2: ein Ablaufdiagramm einer Ausführungsform eines erfindungsgemäßen Interferenzerkennungsverfahrens;
- Fig. 3: ein Blockschaltbild einer weiteren Ausführungsform eines erfindungsgemäßen FMCW-Radarsystems; und
- Fig. 4: ein Diagramm einer beispielhaften Ausführungsform eines erfindungsgemäßen Satzes von Empfangsleistungsschwellwerten.

In allen Figuren sind gleiche bzw. funktionsgleiche Elemente und Vorrichtungen - sofern nichts Anderes angegeben ist - mit denselben Bezugszeichen versehen worden.

### Ausführungsformen der Erfindung

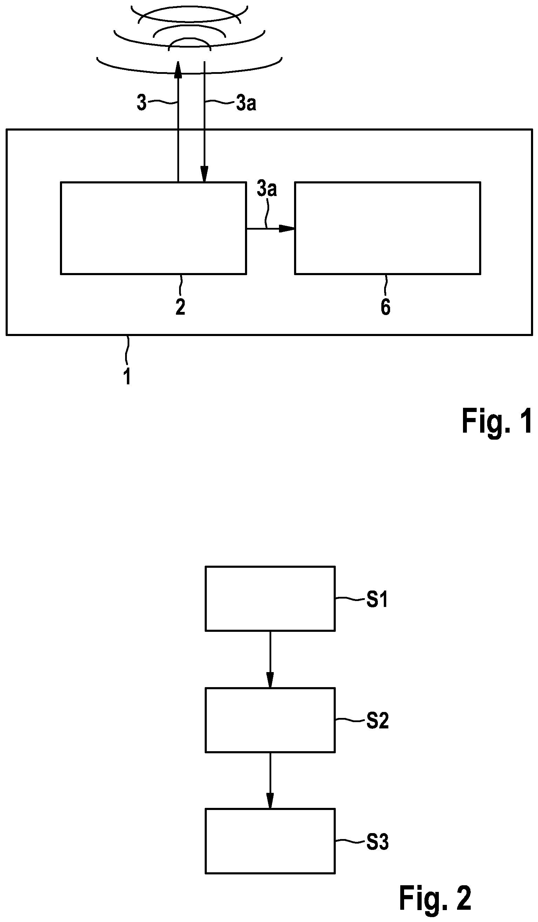

Fig. 1 zeigt ein Blockschaltbild einer Ausführungsform eines erfindungsgemäßen FMCW-Radarsystems 1.

Das FMCW-Radarsystem 1 weist eine Sende-/Empfangseinheit 2 auf, welche Radarsignale 3 aussendet und Radarsignale 3a empfängt. Die ausgesendeten Radarsignale 3 werden dabei mittels vorgegebener Modulationsparameter moduliert. Ferner stellt die Sende-/Empfangseinheit 2 die empfangenen Radarsignale 3a einem Interferenzdetektor 6 bereit, welcher basierend auf zumindest einem den jeweiligen Modulationsparametern entsprechenden frequenzabhängigen Empfangsleistungsschwellwert 8 Interferenzen in den empfangenen Radarsignalen 3a erkennt.

Der Interferenzdetektor 6 ist als Mikrocontroller 6 ausgebildet, der die empfangenen Radarsignale 3a mittels Analog-/Digital-Wandlern in digitale Daten wandelt und Interferenzen in den empfangenen Radarsignalen 3a erkennt.

In weiteren Ausführungsformen ist der Interferenzdetektor 6 als Embedded-Computer, als anwendungsspezifischer Schaltkreis (ASIC), als programmierbarer Logikbaustein oder dergleichen ausgebildet.

Fig. 2 zeigt ein Ablaufdiagramm einer Ausführungsform eines erfindungsgemäßen Interferenzerkennungsverfahrens.

In Fig. 2 wird in einem ersten Schritt S1 ein erfindungsgemäßes FMCW-Radarsystem 1 bereitgestellt. In einem zweiten Schritt S2 werden Radarsignale 3 ausgesendet, welche mittels zumindest eines Modulationsparameters moduliert sind. Von Objekten reflektierte ausgesendete Radarsignale 3 werden in einem dritten Schritt S3 empfangen. In einem vierten Schritt S4 werden basierend auf zumindest einem den jeweiligen Modulationsparametern entsprechenden frequenzabhängigen Empfangsleistungsschwellwert 8 Interferenzen in den empfangenen Radarsignalen 3a erkannt. Die Schritte S3 und S4 können in einer Ausführungsform gleichzeitig ablaufen.

Das erkennen von Interferenzen erfolgt in einer weiteren Ausführungsform insbesondere durch einen Vergleich des Wertes der Empfangsleistung der empfangenen Radarsignale 3a mit einem entsprechenden Empfangsleistungsschwellwert 8. Der Empfangsleistungsschwellwert 8 wird dabei einem Satz von Empfangsleistungsschwellwerten 8 an der Stelle entnommen, welche der Frequenz des empfangenen Radarsignals 3a entspricht. Dabei wird für jede von dem FMCW-Radarsystem 1 genutzte Variante von Modulationsparametern ein Satz von Empfangsleistungsschwellwerten 8 bereitgestellt. In einer weiteren Ausführungsform werden die einzelnen Sätze von Empfangsleistungsschwellwerten 8 in Form eines einzigen Kennlinienfeldes in einem Speicher abgelegt.

Die einzelnen Sätze von Empfangsleistungsschwellwerten 8 können in einer Ausführungsform beispielsweise anhand der FMCW-Gleichung berechnet werden. In weiteren Ausführungsformen können die Sätze von Empfangsleistungsschwellwerten mittels der allgemeinen Radargleichung oder daraus abgeleiteter Berechnungsvorschriften berechnet werden. In noch weiteren Ausführungsformen können die Sätze von Empfangsleistungsschwellwerten experimentell bestimmt werden oder die berechneten Sätze von Empfangsleistungsschwellwerten können anhand experimenteller Versuche an die jeweilige Applikation angepasst werden.

Ein Satz von Empfangsleistungsschwellwerten kann in weiteren Ausführungsformen von der Schwellwerteinheit 7 in Echtzeit bestimmt werden und/oder in Abhängigkeit weiterer Daten angepasst werden. Diese Daten können z.B. eine Geschwindigkeit eines Fahrzeugs mit dem FMCW-Radarsystem 1 bzw. eine Geschwindigkeit des FMCW-Radarsystems 1, Daten erkannter Objekte, wie z.B. Relativgeschwindigkeit und Abstand, die Sendeleistung der Sende-/Empfangseinheit oder dergleichen sein.

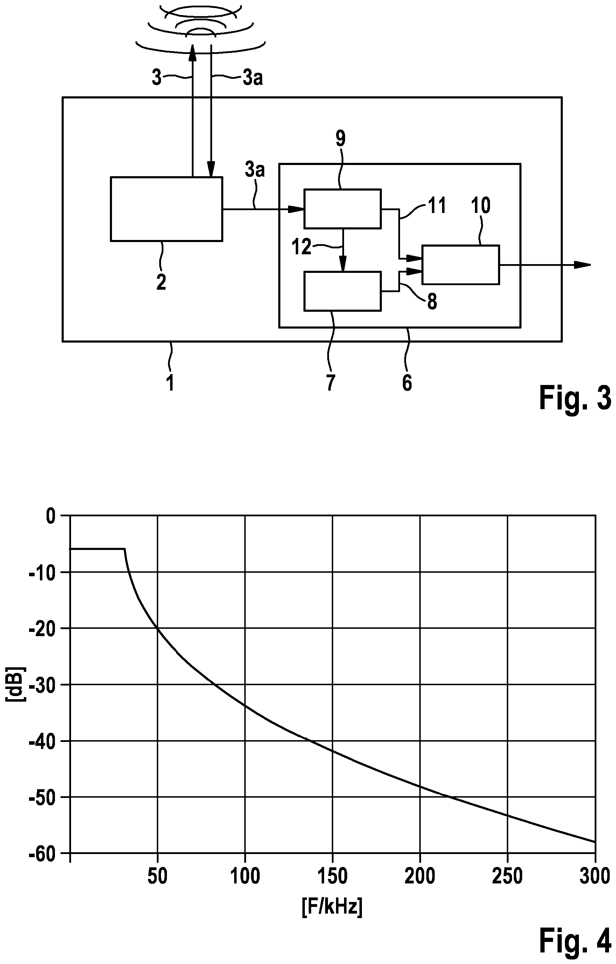

Fig. 3 zeigt ein Blockschaltbild einer weiteren Ausführungsform eines erfindungsgemäßen FMCW-Radarsystems 1.

Das Blockschaltbild in Fig. 3 unterscheidet sich von dem Blockschaltbild in Fig. 1 dahingehend, dass der Interferenzdetektor 6 eine Auswerteeinheit 9 aufweist, welche die empfangenen Radarsignale 3a auswertet und die Empfangsleistung 11 der empfangenen Radarsignale 3a einer Vergleichseinheit 10 sowie die Frequenz 12 der empfangenen Radarsignale 3a einer Schwellwerteinheit 7 bereitstellt. Die Schwellwerteinheit 7 bestimmt zumindest anhand eines vorgegebenen Modulationsparameters und der Frequenz 12 einen entsprechenden Empfangsleistungsschwellwert 8 für die Empfangsleistung 11 der empfangenen Radarsignale 3a. Die Vergleichseinheit 10 vergleicht daraufhin die Empfangsleistung 11 mit dem Empfangsleistungsschwellwert 8 und zeigt eine Interferenz an, wenn die Empfangsleistung 11 über dem Empfangsleistungsschwellwert 8 liegt. Die Schwellwerteinheit 7 kann die Empfangsleistungsschwellwerte 8 dabei aus einem Speicher auslesen oder in Echtzeit berechnen.

Fig. 4 zeigt ein Diagramm einer beispielhaften Ausführungsform eines erfindungsgemäßen Satzes von Empfangsleistungsschwellwerten.

In Fig. 4 ist ein Diagramm eines beispielhaften Satzes von Empfangsleistungsschwellwerten für eine Modulationssteilheit von 400 MHz/ms in Form einer Schwellwertkurve dargestellt. Das Diagramm basiert ferner auf einem Radarrückstreuquerschnitt von 3000m², einem Relativgeschwindigkeitsbereich von -75 m/s bis +20 m/s und einem Zielabstand von 1 m bis 200 m.

In einer Ausführungsform eines erfindungsgemäßen Radarsystems wird die Schwellwertkurve in Form eines Satzes von Empfangsleistungsschwellwerten abgespeichert. Dabei werden die Punkte der Schwellwertkurve in dem Satz von Empfangsleistungsschwellwerten als Paare von Frequenz und Empfangsleistung gespeichert. Dabei entspricht der frequenzmäßige Abstand der Paare der frequenzmäßigen Auflösung der Sende-/Empfangseinheit.

In dem Diagramm ist auf der Abszissenachse die Frequenz des empfangenen Radarsignals 3a aufgetragen. Die aufgetragene Frequenz beginnt bei 0 kHz und endet bei 300 kHz, dabei sind an der Abszissenachse jeweils Schritte von 50 kHz gekennzeichnet. An der Ordinatenachse ist die Empfangsleistung in dB von 0 dB bis -60 dB in Schritten von 10 dB aufgetragen. Ferner ist in dem Diagramm eine Kurve aufgetragen. Die Kurve verläuft von 0 Hz bis ca. 40 kHz bei ca. -8 dB. Danach fällt die Kurve bis 300 kHz mit zunehmend geringerem Gradienten bis auf ca. -57 dB ab.

Der Bereich über der oberen Kurve ist der Bereich, der als Interferenzdetektionsbereich gilt. Wird für ein empfangenes Radarsignal 3a bei einer Frequenz eine Empfangsleistung bestimmt, welche über der oberen Kurve liegt, wird davon ausgegangen, dass eine Interferenz vorliegt. Liegt die Empfangsleistung empfangener Radarsignale 3a in dem Bereich unter der Kurve, so kann davon ausgegangen werden, dass ein Objekt in dem Erkennungsbereich der Sende-/Empfangseinheit 2 liegt.

In einer Ausführungsform des vorliegenden Radarsystems entsprechen die frequenzabhängigen Empfangsleistungsschwellwerte der oberen Kurve des Diagramms. In weiteren Ausführungsformen sind andere Kurvenverläufe in Abhängigkeit der Modulationssteilheit, anderer Modulationsparameter und fahrzeugspezifischer Parameter möglich.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

## Patentansprüche

1. FMCW-Radarsystem,
mit einer Sende-/Empfangseinheit (2), welche dazu ausgebildet ist, Radarsignale (3), welche mittels zumindest eines Modulationsparameters moduliert sind, auszusenden und Radarsignale (3a), welche von Objekten reflektiert werden zu empfangen;
mit einem Interferenzdetektor (6) zum Erkennen von Interferenzen in den empfangenen Radarsignalen (3a) basierend auf zumindest einem den jeweiligen Modulationsparametern entsprechenden frequenzabhängigen Empfangsleistungsschwellwert (8), wobei einer der Modulationsparameter eine Modulationssteilheit des ausgesendeten Radarsignals ist;
**dadurch gekennzeichnet,**
**dass** die Modulationsparameter ferner eine Sendeleistung der Sende-/Empfangseinheit (2) und/oder einen maximal auftretenden Radarrückstreuquerschnitt erwarteter Objekte und/oder eine Geschwindigkeit, mit welcher sich das FMCW-Radarsystem (1) bewegt, aufweisen.

2. FMCW-Radarsystem nach Anspruch 1,
**dadurch gekennzeichnet,**
**dass** der Interferenzdetektor (6) eine Auswerteeinheit (9) aufweist, welche dazu ausgebildet ist, die Empfangsleistung (11) und die Frequenz (12) der empfangenen Radarsignale (3a) zu bestimmen, eine Schwellwerteinheit (7) aufweist, welche dazu ausgebildet ist, den zumindest einen frequenzabhängigen Empfangsleistungsschwellwert (8) basierend auf der bestimmten Frequenz (12) aus einem Satz den jeweiligen Modulationsparametern entsprechender frequenzabhängiger Empfangsleistungsschwellwerte (8) zu bestimmen, und eine Vergleichseinheit (10) aufweist, welche dazu ausgebildet ist, den bestimmten Empfangsleistungsschwellwert (8) mit der Empfangsleistung (11) der empfangenen Radarsignale (3a) zu vergleichen und das Vorhandensein einer Interferenz anzuzeigen, falls die Empfangsleistung (11) größer ist als der Empfangsleistungsschwellwert (8).

3. FMCW-Radarsystem nach Anspruch 2,
**dadurch gekennzeichnet,**
**dass** die Modulationsparameter ferner einen Gewinn der Antenne der Sende-/Empfangseinheit (2) und/oder Daten bereits erkannter Objekte aufweisen.

4. FMCW-Radarsystem nach einem der Ansprüche 2 und 3,
**dadurch gekennzeichnet,**
**dass** die Schwellwerteinheit (7) dazu ausgebildet ist, den Empfangsleistungsschwellwert (8) ferner basierend auf einer Einbausituation der Sende-/Empfangseinheit (2) zu bestimmen; und/oder
**dass** die Schwellwerteinheit (7) dazu ausgebildet ist, den Empfangsleistungsschwellwert (8) ferner basierend auf einer Sende-/Empfangscharakteristik der Sende-/Empfangseinheit (2) zu bestimmen.

5. FMCW-Radarsystem nach einem der Ansprüche 1 bis 4,
**dadurch gekennzeichnet,**
**dass** ein erster Speicher vorgesehen ist, in welchem für jeweils einen Satz von Empfangsleistungsschwellwerten (8) zumindest zwei Empfangsleistungsschwellwerte (8) für jeweils unterschiedliche Frequenzen gespeichert sind, wobei der Interferenzdetektor (6) dazu ausgebildet ist, einen Empfangsleistungsschwellwert (8) für Frequenzen, für welche kein Empfangsleistungsschwellwert (8) gespeichert ist, basierend auf den zumindest zwei gespeicherten Empfangsleistungsschwellwerten (8) zu interpolieren.

6. FMCW-Radarsystem nach einem der Ansprüche 1 bis 4,
**dadurch gekennzeichnet,**
**dass** ein zweiter Speicher vorgesehen ist, in welchem für eine Vielzahl von Sätzen von Empfangsleistungsschwellwerten (8) jeweils zumindest zwei Empfangsleistungsschwellwerte (8) für jeweils unterschiedliche Frequenzen in einem Kennlinienfeld gespeichert sind.

7. Interferenzerkennungsverfahren für FMCW-Radarsysteme,
mit den Schritten:
Bereitstellen (S1) eines FMCW-Radarsystems (1) nach zumindest einem der Ansprüche 1 bis 6;
Senden (S2) von Radarsignalen (3), welche mittels zumindest eines Modulationsparameters moduliert sind;
Empfangen (S3) von Radarsignalen (3a), welche von Objekten reflektiert werden;
Erkennen (S4) von Interferenzen in den empfangenen Radarsignalen (3a) basierend auf zumindest einem den jeweiligen Modulationsparametern entsprechenden frequenzabhängigen Empfangsleistungsschwellwert (8), wobei einer der Modulationsparameter eine Modulationssteilheit des ausgesendeten Radarsignals ist;
**dadurch gekennzeichnet,**
**dass** die Modulationsparameter ferner eine Sendeleistung der Sende-/Empfangseinheit (2) und/oder einen maximal auftretenden Radarrückstreuquerschnitt erwarteter Objekte und/oder eine Geschwindigkeit, mit welcher sich das FMCW-Radarsystem (1) bewegt, aufweisen.

8. Interferenzerkennungsverfahren nach Anspruch 7,
**dadurch gekennzeichnet,**
**dass** zum Erkennen (S4) von Interferenzen eine Empfangsleistung (11) und einer Frequenz (12) der empfangenen Radarsignale (3a) bestimmt werden und ein frequenzabhängiger Empfangsleistungsschwellwert (8) basierend auf der bestimmten Frequenz (12) aus einem Satz den jeweiligen Modulationsparametern entsprechender frequenzabhängiger Empfangsleistungsschwellwerte (8) bestimmt wird und der Empfangsleistungsschwellwert (8) mit der Empfangsleistung (11) der empfangenen Radarsignale (3a) verglichen wird und eine Interferenz angezeigt wird, falls die Empfangsleistung (11) größer ist als der bestimmte Empfangsleistungsschwellwert (8).

9. Interferenzerkennungsverfahren nach zumindest einem der Ansprüche 7 und 8,
**dadurch gekennzeichnet,**
**dass** die Modulationsparameter ferner einen Gewinn der Antenne der Sende-/Empfangseinheit (2) und/oder Daten von durch das FMCW-Radarsystem (1) bereits erkannter Objekte aufweisen.

10. Interferenzerkennungsverfahren nach zumindest einem der Ansprüche 7 bis 9,
**dadurch gekennzeichnet,**
**dass** beim Bestimmen eines Empfangsleistungsschwellwerts (8) der Empfangsleistungsschwellwert (8) basierend auf einer Einbausituation der Sende-/Empfangseinheit (2) und/oder basierend auf einer Sende-/Empfangscharakteristik der Sende-/Empfangseinheit (2) bestimmt wird.

11. Interferenzerkennungsverfahren nach zumindest einem der Ansprüche 7 bis 10,
**dadurch gekennzeichnet,**
**dass** zumindest zwei Empfangsleistungsschwellwerte (8) für jeweils unterschiedliche Frequenzen für jeweils einen Satz von Empfangsleistungsschwellwerten (8) gespeichert werden und ein Empfangsleistungsschwellwert (8) basierend auf den zumindest zwei gespeicherten Empfangsleistungsschwellwerten (8) für Frequenzen interpoliert wird, für welche kein Empfangsleistungsschwellwert (8) gespeichert ist.

12. Interferenzerkennungsverfahren nach zumindest einem der Ansprüche 7 bis 11,
**dadurch gekennzeichnet,**
**dass** zumindest zwei Empfangsleistungsschwellwerte (8) für jeweils unterschiedliche Frequenzen für eine Vielzahl von Sätzen von Empfangsleistungsschwellwerten (8) in einem Kennlinienfeld gespeichert werden.

## Claims

1. FMCW radar system,
having a transmission/reception unit (2) that is configured to transmit radar signals (3) modulated by means of at least one modulation parameter and to receive radar signals (3a) reflected by objects;
having an interference detector (6) for identifying interference in the received radar signals (3a) based on at least one frequency-dependent reception power threshold value (8) corresponding to the respective modulation parameters, one of the modulation parameters being a modulation slope of the transmitted radar signal;
**characterized**
**in that** the modulation parameters further have a transmission power of the transmission/reception unit (2) and/or a maximally occurring radar backscatter cross-section of expected objects and/or a speed at which the FMCW radar system (1) moves.

2. FMCW radar system according to Claim 1,
**characterized**
**in that** the interference detector (6) has an evaluation unit (9) that is configured to determine the reception power (11) and the frequency (12) of the received radar signals (3a), has a threshold value unit (7) that is configured to determine the at least one frequency-dependent reception power threshold value (8) based on the determined frequency (12) from a set of frequency-dependent reception power threshold values (8) corresponding to the respective modulation parameters, and has a comparison unit (10) that is configured to compare the determined reception power threshold value (8) with the reception power (11) of the received radar signals (3a) and to indicate the presence of an interference if the reception power (11) is greater than the reception power threshold value (8).

3. FMCW radar system according to Claim 2,
**characterized**
**in that** the modulation parameters further have a yield of the antenna of the transmission/reception unit (2) and/or data of already identified objects.

4. FMCW radar system according to either of Claims 2 and 3,
**characterized**
**in that** the threshold value unit (7) is configured to determine the reception power threshold value (8) further based on an installation situation of the transmission/reception unit (2); and/or
**in that** the threshold value unit (7) is configured to determine the reception power threshold value (8) further based on a transmission/reception characteristic of the transmission/reception unit (2).

5. FMCW radar system according to one of Claims 1 to 4,
**characterized**
**in that** a first memory is provided that stores, for a respective set of reception power threshold values (8), at least two reception power threshold values (8) for in each case different frequencies, wherein the interference detector (6) is configured to interpolate a reception power threshold value (8) for frequencies for which no reception power threshold value (8) is stored based on the at least two stored reception power threshold values (8).

6. FMCW radar system according to one of Claims 1 to 4,
**characterized**
**in that** a second memory is provided that stores, for each of a multiplicity of sets of reception power threshold values (8), at least two reception power threshold values (8) for in each case different frequencies in a family of characteristic curves.

7. Interference identification method for FMCW radar systems, having the steps of:
providing (S1) an FMCW radar system (1) according to at least one of Claims 1 to 6;
sending (S2) radar signals (3) modulated by means of at least one modulation parameter;
receiving (S3) radar signals (3a) reflected by objects;
identifying (S4) interference in the received radar signals (3a) based on at least one frequency-dependent reception power threshold value (8) corresponding to the respective modulation parameters, one of the modulation parameters being a modulation slope of the transmitted radar signal;
**characterized**
**in that** the modulation parameters further have a transmission power of the transmission/reception unit (2) and/or a maximally occurring radar backscatter cross-section of expected objects and/or a speed at which the FMCW radar system (1) moves.

8. Interference identification method according to Claim 7,
**characterized**
**in that** interference is identified (S4) by virtue of a reception power (11) and a frequency (12) of the received radar signals (3a) being determined and a frequency-dependent reception power threshold value (8) being determined based on the determined frequency (12) from a set of frequency-dependent reception power threshold values (8) corresponding to the respective modulation parameters and the reception power threshold value (8) being compared with the reception power (11) of the received radar signals (3a) and an interference being indicated if the reception power (11) is greater than the determined reception power threshold value (8).

9. Interference identification method according to at least either of Claims 7 and 8,
**characterized**
**in that** the modulation parameters further have a yield of the antenna of the transmission/reception unit (2) and/or data from objects already identified by the FMCW radar system (1).

10. Interference identification method according to at least one of Claims 7 to 9,
**characterized**
**in that** the determining of a reception power threshold value (8) involves the reception power threshold value (8) being determined based on an installation situation of the transmission/reception unit (2) and/or based on a transmission/reception characteristic of the transmission/reception unit (2).

11. Interference identification method according to at least one of Claims 7 to 10,
**characterized**
**in that** at least two reception power threshold values (8) for in each case different frequencies are stored for a respective set of reception power threshold values (8) and a reception power threshold value (8) is interpolated based on the at least two stored reception power threshold values (8) for frequencies for which no reception power threshold value (8) is stored.

12. Interference identification method according to at least one of Claims 7 to 11,
**characterized**
**in that** at least two reception power threshold values (8) for in each case different frequencies are stored for a multiplicity of sets of reception power threshold values (8) in a family of characteristic curves.

## Revendications

1. Système radar FMCW ("Frequency Modulated Continuous Wave" - à onde continue modulée en fréquence) présentant
une unité d'émission-réception (2) configurée pour émettre des signaux radar (3) modulés au moyen d'au moins un paramètre de modulation et pour recevoir des signaux radar (3a) réfléchis par des objets,
un détecteur d'interférences (6) qui détecte la présence d'interférences dans les signaux radar (3a) reçus sur la base d'au moins une valeur de seuil (8) de la puissance de réception dépendant de la fréquence et correspondant aux paramètres de modulation concernés, un des paramètres de modulation étant le gradient de modulation du signal radar émis,
**caractérisé en ce que**
les paramètres de modulation présentent en outre la puissance d'émission de l'unité d'émission/réception (2), la section transversale de rétrodiffusion radar maximale des objets attendus et/ou la vitesse à laquelle le système radar FMCW (1) se déplace.

2. Système radar FMCW selon la revendication 1,
**caractérisé en ce que** le détecteur d'interférence (6) présente une unité d'évaluation (9) configurée pour déterminer la puissance de réception (11) et la fréquence (12) destinée au radar (3a) reçu, une unité (7) à valeur de seuil configurée pour déterminer la ou les valeurs de seuil (8) de la puissance de réception dépendant de la fréquence sur la base de la fréquence (12) qui a été déterminée à partir d'un jeu de valeurs de seuil (8) de la puissance de réception dépendant de la fréquence correspondant aux paramètres de modulation concernés et une unité de comparaison (10) configurée pour comparer la valeur de seuil (8) de la puissance de réception à la puissance de réception (11) des signaux radar (3a) reçus et indiquer la présence d'une interférence au cas où la puissance de réception (11) est supérieure à la valeur de seuil (8) de la puissance de réception.

3. Système radar FMCW selon la revendication 2, dans lequel les paramètres de modulation présentent en outre le gain de l'antenne de l'unité d'émission/réception (2) et/ou des données d'objets déjà connus.

4. Système radar FMCW selon l'une des revendications 2 et 3, **caractérisé en ce que** l'unité (7) à valeurs de seuil est configurée pour déterminer la valeur de seuil (8) de la puissance de réception également sur la base de la situation de montage de l'unité d'émission/réception (2) et/ou **en ce que** l'unité (7) à valeur de seuil est configurée pour déterminer la valeur de seuil (8) de la puissance de réception également sur la base d'une caractéristique d'émission/réception de l'unité d'émission/réception (2).

5. Système radar FMCW selon l'une des revendications 1 à 4, **caractérisé en ce qu'**il présente une première mémoire dans laquelle au moins deux valeurs de seuil (8) de la puissance de réception sont conservées pour chacune des différentes fréquences de chaque jeu de valeurs de seuil (8) de la puissance de réception, le détecteur d'interférences (6) étant configuré pour interpoler sur la base des deux ou plusieurs valeurs de seuil (8) de la puissance de réception conservées en mémoire une valeur de seuil (8) de la puissance de réception pour des fréquences pour lesquelles aucune valeur de seuil (8) de la puissance de réception n'est conservée en mémoire.

6. Système radar FMCW selon l'une des revendications 1 à 4, **caractérisé en ce qu'**une deuxième mémoire est prévue pour conserver dans un champ de lignes caractéristiques pour chacune des différentes fréquences au moins deux valeurs de seuil (8) de la puissance de réception parmi plusieurs jeux de valeurs de seuil (8) de la puissance de réception.

7. Procédé de détection d'interférences pour systèmes radar FMCW, le procédé comportant les étapes suivantes :
prévoir (S1) un système radar FMCW (1) selon au moins l'une des revendications 1 à 6,
envoyer (S2) des signaux radar (3) modulés au moyen d'au moins un paramètre de modulation,
recevoir (S3) des signaux radar (3a) qui ont été réfléchis par des objets,
détecter (S4) la présence d'interférence dans les signaux radar (3a) reçus sur la base d'au moins une valeur de seuil (8) de la puissance de réception dépendant de la fréquence et correspondant aux paramètres de modulation concernés, un des paramètres de modulation étant le gradient de modulation du signal radar émis,
**caractérisé en ce que**
les paramètres de modulation présentent en outre la puissance d'émission de l'unité d'émission/réception (2), la section transversale de rétrodiffusion radar maximale des objets attendus et/ou la vitesse à laquelle le système radar FMCW (1) se déplace.

8. Procédé de détection d'interférences selon la revendication 7, **caractérisé en ce que** pour détecter (S4) la présence d'interférences, une puissance de réception (11) et une fréquence (12) des signaux radar reçus (3a) sont déterminées et une valeur de seuil (8) de la puissance de réception dépendant de la fréquence est déterminée sur la base de la fréquence (12) qui a été déterminée à partir d'un jeu de valeurs de seuil (8) de la puissance de réception dépendant de la fréquence et correspondant aux paramètres de modulation concernés, la valeur de seuil (8) de la puissance de réception étant comparée à la puissance de réception (11) des signaux radar (3a) reçus et la présence d'une interférence est indiquée au cas où la puissance de réception (11) est supérieure à la valeur de seuil (8) de la puissance de réception.

9. Procédé de détection d'interférences selon au moins l'une des revendications 7 et 8, **caractérisé en ce que** les paramètres de modulation présentent en outre le gain de l'antenne de l'unité d'émission/réception (2) et/ou des données d'objets déjà détectés par le système de radar FMCW (1).

10. Procédé de détection d'interférences selon au moins l'une des revendications 7 à 9, **caractérisé en ce que** dans la détermination d'une valeur de seuil (8) de la puissance de réception, la valeur de seuil (8) de la puissance de réception est déterminée sur la base de la situation de montage de l'unité d'émission/réception (2) et/ou sur la base d'une caractéristique d'émission/réception de l'unité d'émission/réception (2).

11. Procédé de détection d'interférences selon au moins l'une des revendications 7 à 10, **caractérisé en ce qu'**au moins deux valeurs de seuil (8) de la puissance de réception sont conservées en mémoire pour chacune des différentes fréquences et pour chaque jeu de valeurs de seuil (8) de la puissance de réception, et une valeur de seuil (8) de la puissance de réception est conservée en mémoire sur la base des deux ou plusieurs valeurs de seuil (8) de la puissance de réception pour des fréquences pour lesquelles aucune valeur de seuil (8) de la puissance de réception n'a été conservée en mémoire.

12. Procédé de détection d'interférences selon au moins l'une des revendications 7 à 11, **caractérisé en ce qu'**au moins deux valeurs de seuil (8) de la puissance de réception sont conservées en mémoire dans un champ de lignes caractéristiques pour chacune des différentes fréquences et pour plusieurs jeux de valeurs de seuil (8) de la puissance de réception.
